# EUROPEAN PATENT APPLICATION

(11) **EP 4 847 239 A1**
(43) Date of publication of application: **02.12.2026**
(21) Application number: 25841815.1
(22) Date of filing: 19.11.2025
(51) Int. Cl.: B29C 70/24, B29B 15/12, B29C 70/22, B29B 13/06, B29C 70/54, B33Y 10/00, B33Y 80/00, B29K 105/08, B29K 101/12, B29K 101/10

(54) **3D NODE-WINDING-BASED ULTRALIGHT, HIGH-STRENGTH CONTINUOUS-FIBER COMPOSITE**

(30) Priority: 18.04.2025 KR 20250050584; 22.05.2025 KR 20250066467
(71) Applicant: Seoul National University R&DB Foundation, Seoul 08826 (KR)
(72) Inventor: AHN, Sung Hoon, Gwanak-gu, Seoul 08826 (KR); CHOI, Jun Young, Gwanak-gu, Seoul 08826 (KR)
(74) Representative: TRBL Intellectual Property
(86) International application number: PCT/KR2025/095742
(87) International publication number: WO 2026/221208

(57) **Abstract**

According to one embodiment of the present invention, the present invention relates to a modular coupling structure using an ultra-lightweight, high-strength lattice continuous-fiber composite material, and a method for manufacturing the same.

## Description

### FIELD OF THE INVENTION

The present invention relates to a structure manufactured from a composite material, and more particularly, to the development of a three-dimensional structure having a novel structure.

### BACKGROUND OF THE INVENTION

In fields involving the development of structures where lightweight materials are critical-such as the machinery, aerospace, automotive, and robotics industries-balancing strength and weight in material selection has long remained an important technical challenge.

For example, titanium alloys (e.g., Ti-6Al-4V) provide excellent mechanical performance with a tensile strength of about 900 to 1,200 MPa and also exhibit outstanding corrosion resistance; however, their density is about 4.5 g/cm³, which limits further weight reduction of structures. This, in particular, restricts design freedom in systems where mass directly leads to performance degradation, such as aircraft, robotic arms, and drones.

By contrast, plastic materials, exemplified by PLA, are very lightweight with a density of about 1.25 g/cm³, and are highly compatible with 3D printing (FDM) technology, enabling rapid and facile fabrication of shapes. However, common plastics generally have a low tensile strength of about 50 to 60 MPa and also lack thermal and impact resistance, thereby limiting their use in environments subject to high structural loads.

A material introduced to overcome these limitations is carbon fiber reinforced plastic (CFRP). In particular, composites utilizing continuous carbon fibers exhibit an excellent strength-to-weight ratio, with a tensile strength of up to 3,500 MPa and a density of about 1.6 g/cm³, and are used in aircraft, supercars, and space structures. However, conventional CFRP is mostly produced by a two-dimensional planar lay-up process (e.g., prepreg lay-up followed by autoclave curing), and thus has limitations in realizing highly porous structures with internal voids or complex three-dimensional shapes. In addition, mold and tooling design is essential, and the production cost and equipment burden are high.

In particular, while CFRP is strong in the tensile direction, stress discontinuities occur due to fiber cutting and interlaminar boundaries, and because of the interfacial strength between the fiber and resin and the inherent brittleness of the resin itself, fiber buckling and interlaminar delamination readily occur under compressive loading conditions.

For these reasons, attempts have recently been made to apply CFRP to lattice structures capable of maintaining strength while having internal voids. In theory, such structures have advantages in that loads can be distributed along lattice paths to increase the overall strength of the structure while reducing weight.

However, conventional methods for manufacturing highly porous structures also suffer from serious limitations as follows. First, a method of assembling separately molded lattice parts by bolt fastening or snap-fit may appear simple and reusable, but structural discontinuity at the joints causes stress concentration and increases the risk of failure. In particular, a snap-fit structure relies on forced press-fitting, resulting in low precision and significant durability degradation upon repeated assembly.

Next, 3D printing-based lattice structures have advantages in shape realization; however, due to weak interlayer adhesion inherent to the FDM method, strength is limited, and it is difficult to apply such structures to actual high-load-bearing structures. Since most printing materials are thermoplastic plastics, they are vulnerable to long-term loading or temperature changes and lack structural integrity.

In addition, manual fabrication of conventional CFRP lattices generally involves inserting or cross-arranging cut prepreg pieces or carbon tubes and bonding them, which results in low manual precision and is unsuitable for repeated production. Further, molds may be required or the realization of porous shapes may be limited, making it difficult to implement large structures or modularization. In other words, conventional composites have mostly been limited to a single reinforcing fiber family centered on carbon fibers, making it difficult to selectively apply various fiber families and material combinations-such as metal fibers and natural fibers-depending on structural applications.

As a result, these technologies have clear limitations in various aspects, including mechanical strength, compressive strength, precision, productivity, and shape freedom.

### BRIEF DESCRIPTION OF THE INVENTION

The present invention aims to overcome the limitations of manual fabrication by providing a precise manufacturing method capable of realizing a three-dimensional lattice or porous structure based on a single continuous carbon fiber without structural discontinuity, and by securing both structural repeatability and precision through a fiber alignment and fixation mechanism utilizing a 3D-printed support.

Accordingly, the present invention is intended to develop an integrated process that, beyond the structural limitations of conventional two-dimensional planar lay-up CFRP, enables fabrication without molds, adhesives, or fastening parts, and allows the composite material to be integrated into a single body after resin impregnation. The present invention further aims to implement a lattice structure having high strength, high precision, and high durability by applying a plurality of node-support structures to secure tension retention and mechanical fastening stability, and by providing a 3D node winding platform technology that connects a simple planar structure to a spatial three-dimensional structure. In addition, through a design approach that enables modularization and stacking, the structure can be extended to structures of various sizes and shapes, can be applied to multiple fields such as robotics, UAVs, medical devices, and construction, and is configured to satisfy both improved compressive strength and weight reduction, thereby compensating for the weaknesses of conventional CFRP and ensuring structural reliability.

In order to solve the above-described problems, one aspect of the present invention proposes a new manufacturing process and structural design capable of producing a high-strength and ultra-lightweight structure by using a three-dimensional lattice or porous structure to overcome the limitations of the conventional two-dimensional planar lay-up method of CFRP.

According to one embodiment of the present invention, a lattice high-strength coupling structure may include: a plurality of core supports; a node support connected to ends of the core supports to form connections among the plurality of core supports; a continuous fibrous material provided to extend continuously without discontinuity along an outer surface of a three-dimensional structure constituted by the core supports and the node support; and a resin material forming a coating on the core supports, the node support, and the continuous fibrous material.

According to one embodiment, at least one of the core supports and the node support may include at least one selected from the group consisting of PLA, ABS, PETG, TPU, Nylon, PC, and ASA, which are 3D-printing-based thermoplastic resin filaments; and at least one selected from the group consisting of PVA and BVOH, which are water-soluble support filaments.

According to one embodiment, the plurality of core supports may include a plurality of core branches extending in a rod shape from a center so as to form a mutually orthogonal structure.

According to one embodiment, the node support may include: a first-type node support including a plurality of node branches extending from a center so as to form a mutually orthogonal structure; and a second-type node support having a clip-lock structure in which insertion is performed by pressing in one direction and separation in the reverse direction is difficult.

According to one embodiment, the node branches of the first-type node support may have a smaller diameter than the core branches, and ends of the node branches may be inserted into ends of the core branches, thereby connecting the core supports to form one unit cell.

According to one embodiment, in the unit cell, a center of the plurality of the core supports may be a body center of a body-centered cubic (BCC) structure, and a center of the first-type node support may form outer corners of the BCC structure, thereby forming a unit-cell assembly.

According to one embodiment, the unit cell may have, crystallographically, a lattice form of one of simple cubic (SC), body-centered cubic (BCC), and face-centered cubic (FCC) structures.

According to one embodiment, the plurality of the core supports and the second-type node support may be connected to form a two-dimensional unit cell (2D unit cell), and the two-dimensional unit cell may be configured to be continuously extended into a three-dimensional node structure.

According to one embodiment, the unit cell may be selectively removable or maintainable.

According to one embodiment, the continuous fibrous material may include: at least one selected from the group consisting of carbon fiber, glass fiber, basalt fiber, ceramic fiber, silicon carbide fiber, alumina fiber, aramid fiber, Kevlar fiber, graphite fiber, PBO fiber, PEEK fiber, PPS fiber, and metal fiber, which are reinforcing fibers; and at least one selected from the group consisting of polyester, nylon, polyurethane, polyethylene, polypropylene, yarn fiber, cotton fiber, flax fiber, bamboo fiber, silk fiber, and polylactic acid fiber, which are non-reinforcing fibers.

According to one embodiment, the resin material may include at least one selected from: a group consisting of epoxy, vinyl ester, unsaturated polyester, phenolic resin, melamine resin, and urea resin, which are irreversible thermosetting resins; and a group consisting of Diels-Alder-based resins, imine-based resins, urea/urethane dynamic resins, and vitrimers, which are reversible thermosetting resins, and may include a low-viscosity resin having a viscosity of 300 to 500 cps.

According to one embodiment, the lattice high-strength coupling structure may have a three-dimensional structure.

According to another embodiment of the present invention, a method for manufacturing a lattice high-strength coupling structure may include: preparing a plurality of core supports including a plurality of core branch portions and a node support including node branch portions; connecting the node branch portions of the node support to the core branch portions of the plurality of core supports to form a unit cell lattice structure; disposing a continuous fibrous material along outer surfaces of the core supports and the node support; and impregnating the unit cell wound with the continuous fibrous material with a resin material to form a coating on a surface of the unit cell.

According to one embodiment, the step of winding the continuous fibrous material may include: designing at least one single path capable of covering an outer surface of the support on the condition that the continuous fibrous material is not cut in the unit cell; and winding the continuous fibrous material along the designed at least one single path.

According to one embodiment, the method may further include, after the step of winding the continuous fibrous material, a step of tensioning the continuous fibrous material.

According to one embodiment, the method may further include, after impregnating the unit cell with the resin material, a step of drying for 2 hours to 24 hours.

According to one embodiment, the method may further include, after the step of forming the coating on the unit cell surface, a porous weight-reduction step of selectively removing the unit cell.

In embodiments of the present invention, the proposed lattice-based coupling structure is a composite-material structure having mechanical integrity through a low-viscosity resin impregnation and curing process, and is based on a unit-cell modular design that combines a 3D-printed support manufactured by an additive manufacturing method with continuous carbon fibers, thereby ensuring precision in fiber alignment.

In particular, the lattice-based high-strength coupling structure proposed in embodiments of the present invention is applicable as a substitute for, or a reinforcing member of, conventional high-density CFRP panels, since weight reduction of structures in the aerospace and mobility industries is directly linked to performance, fuel efficiency, and safety, and the present structure can maintain internal porosity and sufficient mechanical support.

The lattice-based coupling structures manufactured according to the embodiments proposed herein have the advantage of realizing structures with overwhelmingly higher strength and lower relative density than conventional structures. By including a plurality of types of node supports, issues of stress concentration and fastening instability of conventional lattice structures can be alleviated, and both tension maintenance of continuous fibers and structural stability upon repeated assembly can be secured. Such structural features reduce the risk of joint failure and can improve the compressive and tensile strengths of the entire structure as compared with conventional adhesive-type or simple fastener-type lattice structures. Furthermore, the present invention is configured such that a structure based on a two-dimensional unit cell can be extended by a three-dimensional node winding method, thereby greatly improving shape freedom as well as space and material utilization, and providing a versatile platform-type manufacturing method adaptable to curved-surface and multilayer structural designs. In addition, the present invention is designed to allow the use of reinforcing fibers and non-reinforcing fibers, or combinations of fibers, thereby enabling implementation of an optimized composite structure depending on application-specific properties.

In robotics engineering and precision mechanical systems, since stiffness, precision, and weight must be simultaneously considered even at the level of small components, the present invention can be effectively applied as a modular ultra-lightweight structure to multi-joint mechanism components such as robot arms, fingers (grippers), and joint housings.

In the UAV and drone industry, extreme weight reduction of structures is essential to maximize battery efficiency, while ensuring mechanical strength to withstand loads during flight is also important. The lattice high-strength coupling structure of the present invention is suitable for lightweight structural configurations such as frames, wing reinforcements, and fuselage housings.

In addition, in fields such as medical devices and wearable apparatuses that are worn in close contact with the human body and are used in complex environments, structures must possess both flexibility and strength, and free-form shape realization is important. The lattice high-strength coupling structure of the present invention has a high degree of design freedom and does not require mold removal, and thus can also be utilized for customized wearable structures.

This provides an integrated composite manufacturing platform centered on node-based winding, departing from conventional composite forming methods such as RTM, hot pressing, autoclaving, and AFP. In that three-dimensional structures can be formed without molds, the present invention provides multiple advantages, including simplification of the manufacturing process, cost reduction, and time savings. The present invention is an applied technology that presents a new three-dimensional node winding design paradigm and process system in the field of composite manufacturing technology.

### DESCRIPTION OF THE DRAWINGS

The foregoing and other features and advantages will be more fully understood from the detailed description of the invention, as well as from examples referring to the attached figures, which are described in the following paragraphs, wherein:
Figure 1 is an image illustrating a schematic diagram of first-type and second-type node supports according to an embodiment of the present invention.
Figure 2 is an image illustrating a schematic diagram of 2D-based internal winding and external winding according to an embodiment of the present invention.
Figure 3 is an image illustrating various topology configurations according to an embodiment of the present invention.
Figure 4 is a schematic diagram illustrating a lattice high-strength coupling structure based on a single continuous fiber path according to an embodiment of the present invention, and is an image also showing a structure in which some supports included in the structure are removed.
Figure 5 is an image illustrating an example of manufacturing steps of a lattice high-strength coupling structure according to an embodiment of the present invention.
Figure 6 is a schematic diagram illustrating structures of various unit cells according to an embodiment of the present invention.
Figure 7 is a schematic diagram illustrating a process of designing a single path of a continuous fibrous material provided along an outer surface of an overall structure composed of a plurality of unit cells according to an embodiment of the present invention.
Figure 8 is a schematic diagram illustrating each step of a method for manufacturing a lattice high-strength coupling structure according to an embodiment of the present invention.
Figure 9 is a graph comparing strength and relative density ratio according to the structure (SC, FCC) of a three-dimensional structure manufactured according to an embodiment of the present invention with the same structure (SC, FCC) manufactured from conventional materials.
Figure 10 is a sample photograph of a high-strength coupling structure in which some supports are selectively removed in a lattice high-strength coupling structure according to an embodiment of the present invention.
Figure 11 is a graph showing results of comparing and calculating deformation behavior and compressive strength according to configurations of a lattice high-strength coupling structure according to an embodiment of the present invention.
Figure 12 is an image illustrating a lattice high-strength coupling structure in which unit cells are stacked and extended according to an embodiment of the present invention.
Figure 13 is an image and a graph illustrating FEA results according to configurations of a unit cell according to an embodiment of the present invention.
Figure 14 is a graph illustrating mechanical properties of a lattice high-strength coupling structure according to an embodiment of the present invention.
Figure 15 is a graph illustrating electrical properties of a lattice high-strength coupling structure according to an embodiment of the present invention.
Figure 16 is an image illustrating application demonstration of a lattice high-strength coupling structure according to an embodiment of the present invention.

### DETAILED DESCRIPTION OF THE INVENTION

The embodiments of the present invention are set forth by way of example for the purpose of describing the technical idea of the present invention. The scope of the rights according to the present invention is not limited to the embodiments presented below or the detailed descriptions thereof. Unless otherwise defined, all technical and scientific terms used herein have the meanings generally understood by a person having ordinary skill in the art to which the present invention pertains. All terms used herein are selected for the purpose of more clearly describing the present invention and are not selected to limit the scope of the rights according to the present invention.

Expressions such as "including," "comprising," and "having," as used herein, should be understood as open-ended terms that imply the possibility of including other embodiments, unless otherwise stated in the phrase or sentence in which such expressions are used.

Unless otherwise stated, singular expressions used herein may include plural meanings, and the same applies to singular expressions recited in the claims.

Hereinafter, the present invention will be described in detail with reference to the accompanying drawings, and embodiments of the present invention will be described. In the description of the embodiments below, descriptions of the same or corresponding components may be omitted. However, omission of a description of a component is not intended to mean that such component is not included in any embodiment. Further, the present invention is not limited to the embodiments and drawings described herein.

The present inventors, after studying methods for solving the conventional problems as described above, completed the present invention by proposing, in embodiments of the present invention, an ultra-lightweight, high-strength lattice continuous-fiber composite and a modular structure, and a method for manufacturing the same, and by applying them in an actual research environment.

According to one embodiment of the present invention, a lattice high-strength coupling structure may include: a plurality of core supports; a node support connected to ends of the core supports to form connections among the plurality of core supports; a continuous fibrous material provided to extend continuously without discontinuity along an outer surface of a three-dimensional structure constituted by the core supports and the node support; and a resin material forming a coating on the core supports, the node support, and the continuous fibrous material.

Conventional laminate-centered CFRP structures have limitations in strength, safety, and design freedom because fiber paths are segmented. A three-dimensional lattice structure configuration including a plurality of core supports and node supports interconnecting the core supports, to which a 3D node-based winding technique is applied, is designed such that a continuous fiber is wound along outer surfaces thereof without discontinuity, rather than by a simple adhesive or fastening method, thereby overcoming limitations such as discontinuity of stress transfer paths compared to conventional structures. Such a structure can minimize stress concentration and allow the overall load to be uniformly distributed along the fiber path.

According to one embodiment, at least one of the core supports and the node support may include at least one selected from the group consisting of PLA, ABS, PETG, TPU, Nylon, PC, and ASA, which are 3D-printing-based thermoplastic resin filaments; and at least one selected from the group consisting of PVA and BVOH, which are water-soluble support filaments.

According to one embodiment, the plurality of core supports may include a plurality of core branch portions extending in a rod shape from a center so as to form a mutually orthogonal structure.

A support formed by 3D printing functions as a structural framework for guiding a winding path of a continuous fiber and serves as a node-anchor, thereby providing design flexibility. In addition, a core support and/or a node support using a thermoplastic resin such as PLA in an FDM method may be fabricated in advance and stacked at specific positions within the structure. Meanwhile, when a water-soluble support filament is used to manufacture a structure having a more complex shape or a precision model, for example, after curing, the support may be automatically dissolved and removed by immersing the support in a mild NaOH solution, thereby enabling production of a complex and precise lattice structure without damage. In addition, the node support may be modified to be fixed after being inserted in one direction, and the material of the 3D-printed support may be selectively adjusted depending on the intended purpose.

According to one embodiment, the node support may include: a first-type node support including a plurality of node branch portions extending from a center so as to form a mutually orthogonal structure; and a second-type node support having a clip-lock structure in which insertion is performed by pressing in one direction and separation in the reverse direction is difficult.

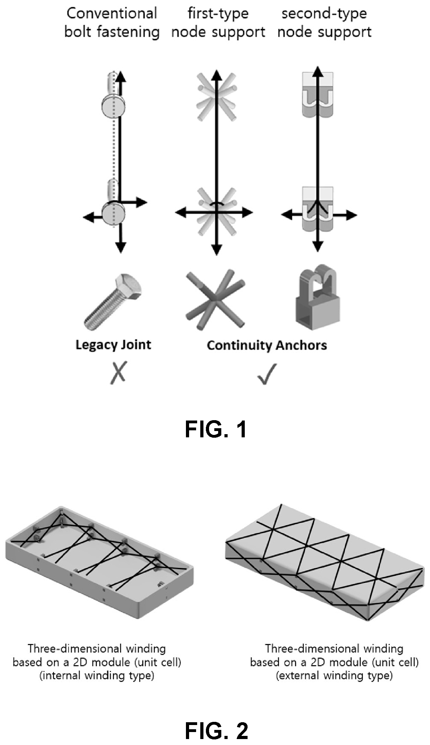

The plurality of core supports may be arranged to form a three-dimensional spatial array mutually connected by the node supports. The first-type node support has a radially connected structure in multiple directions, similar in shape to the core supports, and the second-type node support is designed with a clip-lock structure that is fastened upon insertion in one direction and in which reverse-direction separation is suppressed, thereby maintaining tension of the fiber. The node supports are illustrated in FIG. 1.

The first-type node support may have the same form as the core supports but may be smaller in size, and the second-type node support may not have the same form as the core supports but may be similar in size to, or smaller than, the first-type node support. The size of the node support may be adjustable.

The supports are lighter than conventional bolt-fastening methods and may serve to stably fix the position of the continuous fibrous material provided on outer surfaces of the supports.

According to one embodiment, the node branch portions of the first-type node support may have a smaller diameter than the core branch portions, and ends of the node branch portions may be inserted into ends of the core branch portions, thereby connecting the core supports to form one unit cell.

If necessary, the core branch portions and the node branch portions may also be detachable. The first-type node support may be formed in multiple directions about the core supports to provide a structure capable of inter-facet joining, thereby allowing a plurality of core supports to be connected to one another.

According to one embodiment, in the unit cell, a center of the plurality of core supports may be a body center of a body-centered cubic (BCC) structure, and a center of the first-type node support may form outer corners of the BCC structure, thereby forming a unit-cell assembly.

This allows a structural geometric form to be designed as a unit cell of a lattice structure, thereby satisfying geometric conditions of a structure in which each cell can efficiently distribute a load.

According to one embodiment, the unit cell may have, crystallographically, a lattice form of one of simple cubic (SC), body-centered cubic (BCC), and face-centered cubic (FCC) structures.

The overall structure is formed by repetition of unit cells, and the unit cells may be designed as modules such that stacking, interlocking, and modular growth (expansion) can be performed as needed.

According to one embodiment, the plurality of the core supports and the second-type node support may be connected to form a two-dimensional unit cell (2D unit cell), and the two-dimensional unit cell may be configured to be continuously extended into a three-dimensional node structure.

The second-type node support is designed with a clip-lock structure that is fastened upon insertion in one direction and in which reverse-direction separation is suppressed, so that the continuous fiber can be fixed not to move under tension. In addition, stress distribution in each direction can be uniformly maintained. Such a structure provides mechanical stability while maintaining the fiber path, and in a 2D lattice-based configuration, winding may be performed inside or outside a box-type mold. This is illustrated in FIG. 2.

Load distribution performance is improved, and fiber damage can be minimized even during repetition, coupling, and disassembly of the structure. In addition, the structure is designed to be coupled in the future to various core materials such as metal rods and foams, thereby having high applicability, and if necessary, can also be extended to a closure/encapsulation structure by curing continuous carbon fibers together as an outer skin. Such a 2D-based 3D expansion structure can be applied to realize complex curved-surface designs and spatial structures with a high degree of freedom.

According to one embodiment, the unit cell may be selectively removable or maintainable.

By selectively removing some supports in the structure to form a lattice lightweight structure having internal voids, load distribution characteristics can be adjusted depending on arrangement of the unit cells.

When the structure is configured in a modular form as described above, assembly is possible solely by geometric interlocking, rather than as a single molded product, thereby enabling partial replacement, maintenance, and multipurpose structural design in a complex system design. Each module can be simply coupled by an interlocking or hooking method rather than by a fastening part, and the overall structure can be maintained as a self-supporting structure even without complete adhesion. Accordingly, the structure proposed in the present invention can solve problems of structural discontinuity, stress concentration, and weight increase that conventional fastener-type lattice structures have.

According to one embodiment, the continuous fibrous material may include: at least one selected from the group consisting of carbon fiber, glass fiber, basalt fiber, ceramic fiber, silicon carbide fiber, alumina fiber, aramid fiber, Kevlar fiber, graphite fiber, PBO fiber, PEEK fiber, PPS fiber, and metal fiber, which are reinforcing fibers; and at least one selected from the group consisting of polyester, nylon, polyurethane, polyethylene, polypropylene, yarn fiber, cotton fiber, flax fiber, bamboo fiber, silk fiber, and polylactic acid fiber, which are non-reinforcing fibers.

Depending on the selection of such fibers, mechanical strength, electrical conductivity, heat resistance, and flexibility may vary, and in particular, it was confirmed that a lattice structure based on reinforcing fibers exhibited improved mechanical strength as compared to conventional 2D CFRP.

According to one embodiment, the resin material may include at least one selected from: a group consisting of epoxy, vinyl ester, unsaturated polyester, phenolic resin, melamine resin, and urea resin, which are irreversible thermosetting resins; and a group consisting of Diels-Alder-based resins, imine-based resins, urea/urethane dynamic resins, and vitrimers, which are reversible thermosetting resins, and may include a low-viscosity resin having a viscosity of 300 to 500 cps.

The resin material can readily access an interior and/or a surface of the lattice structure during impregnation, thereby reducing impregnation defects and void formation and forming a structure in which the high-strength mechanical performance of carbon fibers and the resin bonding strength are combined.

According to one embodiment, the lattice high-strength coupling structure may have a three-dimensional structure.

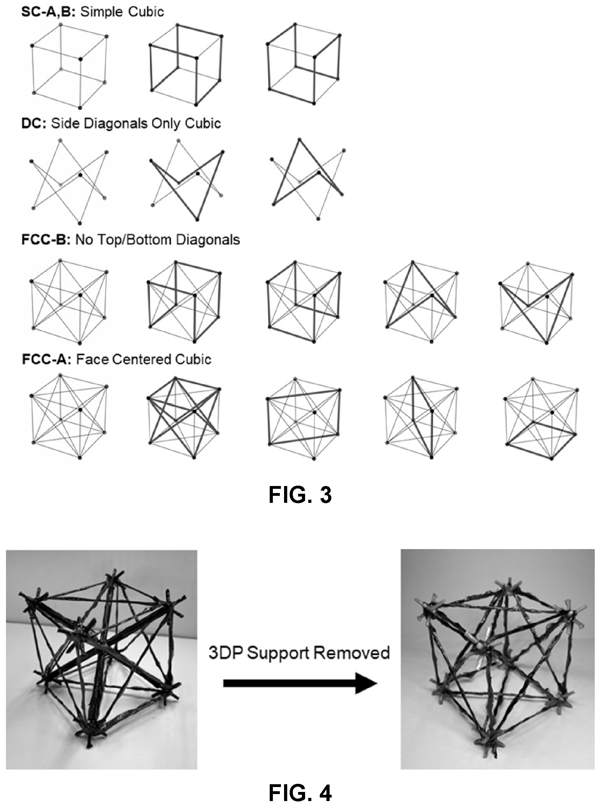

The three-dimensional node-based winding structure can accommodate various lattice topology configurations, such as triangular and 2D lattice configurations, in addition to crystallographic structures such as SC, FCC, and BCC, by using a first-type node support having a multi-face junction configuration and a second-type node support having a clip-lock configuration, or a combination of the first-type and second-type node supports, and can be expanded by assembly to a required size, directionality, and thickness. This is illustrated in FIG. 3.

Unlike conventional laminate methods, the present invention enables fabrication of a fully continuous, ultra-high-strength, ultra-lightweight structure, and thus can be readily expanded and applied to complex three-dimensional structures or large-scale structures. In addition, the present invention can simultaneously satisfy shape optimization, application-specific design modification, and ease of on-site assembly and maintenance, and can be flexibly applied in various industrial fields.

According to another embodiment of the present invention, a method for manufacturing a lattice high-strength coupling structure may include: preparing a plurality of core supports including core branch portions and a node support including node branch portions; connecting the node branch portions of the node support to the core branch portions of the core supports to form a unit cell lattice structure; disposing a continuous fibrous material along outer surfaces of the plurality of core supports and the node support; and impregnating the unit cell wound with the continuous fibrous material with a resin material to form a coating on a surface of the unit cell.

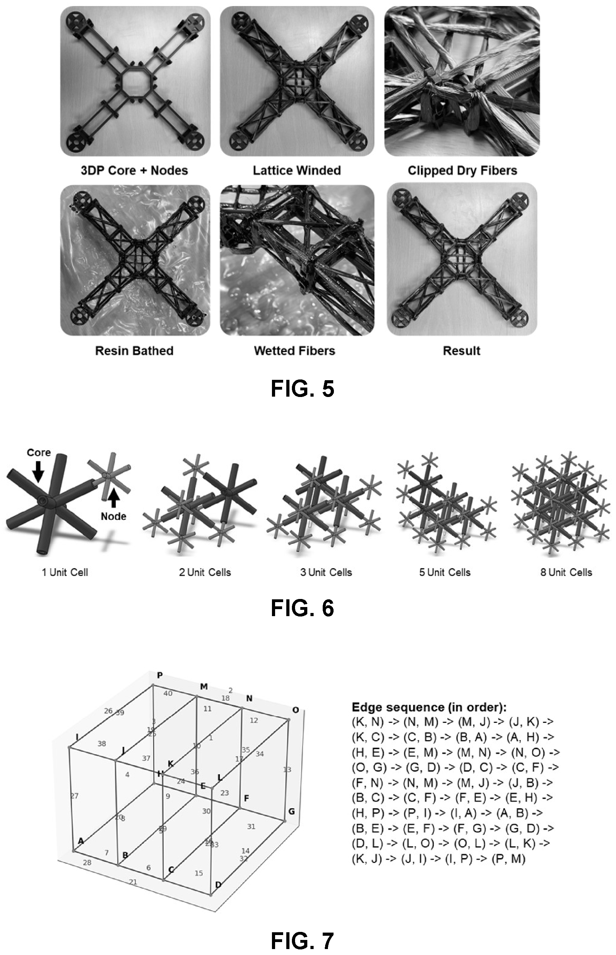

The final structure obtained through the above steps may be maintained as-is within the lattice high-strength coupling structure, and, if necessary, part or all of the structure may be removed from the structure through heat treatment, dissolution, and the like depending on the user's intention. An embodiment in which part of such supports is removed is illustrated in FIG. 4. After the resin impregnation step, the resin may be cured by heat and/or ultraviolet curing so that the structure becomes rigid and the respective components constituting the structure can be integrated into a single body. This is illustrated in FIG. 5.

According to one embodiment, the step of winding the continuous fibrous material may include: designing at least one single path capable of covering an outer surface of the supports on the condition that the continuous fibrous material is not cut in the unit cell; and winding the continuous fibrous material along the designed at least one single path.

All fibers in the structure are constituted by a single continuous fiber strand and may be arranged within the structural space formed by the unit cells along a path that continues without discontinuity.

According to such an embodiment, an expensive precision metal mold required in conventional CFRP manufacturing is not necessary, and an autoclave or hot-press process under high temperature and high pressure is not required, so that the fiber path can be accurately aligned and fixed without separate tooling.

In addition, the supports and the continuous fibrous material provided therearound can secure a single path through CAD-based path design so as to ensure precision and repeatable reproducibility, thereby being applicable to small-volume production and repeated prototyping and reducing manufacturing cost and time compared to conventional methods. Further, the tow size may be one based on 24k, and may be adjusted to 3k to 72k as needed, thereby ensuring three-dimensional spatial continuity.

Such a single continuous fiber path can distribute mechanical stress transfer and secure integrity and strength of the overall structure.

According to one embodiment, the method may further include, after the step of winding the continuous fibrous material, a step of tensioning the continuous fibrous material.

The continuous carbon fiber can maintain its path within the structure through the tensioning step, can have constant tension, and can be aligned at an accurate position in space.

In addition, since the supports are divided into the plurality of core supports and the node support, the position of the fiber can be accurately fixed, thereby preventing deformation during winding or tensioning.

According to one embodiment, the method may further include, after impregnating the unit cell with the resin material, a step of drying for 2 hours to 24 hours.

Such a drying process may be adjusted depending on the selected resin material. In one embodiment, after high-temperature drying, room-temperature drying may be additionally performed.

According to one embodiment, the method may further include, after the step of forming the coating on the unit cell surface, a porous weight-reduction step of selectively removing the unit cell.

Such an approach enables a design strategy capable of maximizing structural strength, since removing the unit cell can lower relative density and improve mechanical performance.

When a standard thermoplastic filament is used as a material for manufacturing the supports, after curing, some supports may be manually removed using nippers, cutting tools, and the like.

As another example, some supports may also be removed by methods such as thermal deformation and mechanical cutting. Such methods are applicable even to high-precision structures in which manual removal is difficult, and can be extended to an automated highspeed post-processing process without the burden of long-term manual removal.

In another embodiment different from the above-described embodiments, only an outer surface may be formed of CFRP, and the entire internal structure may be printed as a 3D-printing-based support structure (3DP support), and three-dimensional winding of a continuous fibrous material may be performed thereon. Embodiments proposed in the present invention are also extendable to such a manufacturing method, and this also falls within the design scope of the inventors.

In embodiments of the present invention, an integrated composite material and a method for manufacturing the same are proposed that can overcome weaknesses of the conventional art across overall aspects of structural design, material composition, and manufacturing processes, and can simultaneously satisfy high strength, high shape freedom, ultra-lightweight characteristics, and modularity, while also securing buckling resistance. In particular, when the technology proposed in embodiments of the present invention is in the future linked with automated equipment and optimized design incorporating AI, it can be developed into a general-purpose, high-performance lightweight structural platform applicable to various industries.

### Examples

Hereinafter, the present invention will be described in detail through examples. However, these examples are provided to illustratively describe certain experimental methods and configurations of the present invention, and the scope of the present invention is not limited to these examples.

### Example 1: Design and Fabrication of Supports

In the first example of the present invention, the supports used are divided into two parts. First, a first support is a core support for forming an isotropic body-centered cubic (BCC) structure, and serves as a principal lattice element responsible for stiffness and stability of the overall structure. A second support, i.e., a node support, can serve as a connection point that connects the plurality of core supports described above and expands a unit cell into a lattice structure. Such a node support includes a plurality of node branch portions extending from a center so as to form a mutually orthogonal structure, and a continuous fibrous material can be fixed and wound around the node branch portions. In addition to the node support, the core supports may also include core branch portions that are orthogonal to each other. The branch portions included in each of such supports may extend in an axially orthogonal structure (for example, orthogonal to the x-axis, y-axis, and z-axis).

In this example, carbon fiber was used as the continuous fibrous material. The core supports and the node support were printed using a Bambu X1 Carbon 3D printer with a gray PLA filament having a density of 1.05 g/cm³, and a 15% infill setting was employed to secure both weight reduction and support rigidity. In this process, the printing resolution of the 3D printer was set to 0.2 mm, the nozzle temperature was set to 215°C, and the bed temperature was set to 60°C, and the resulting supports are illustrated in FIG. 6.

### Example 2: Manufacturing Process of Lattice High-Strength Coupling Structure

In the second example, except that the structure was designed as an FCC structure, a coupling structure was fabricated in the same manner as described above by winding a high-strength continuous fibrous material, i.e., carbon fiber, around the core supports and the node supports that were manufactured by 3D printing and then coupled to each other, thereby forming the structure. The carbon fiber used herein was 24K carbon fiber roving, which is a high-strength continuous fiber and was used as a main material for transferring stress throughout the structure.

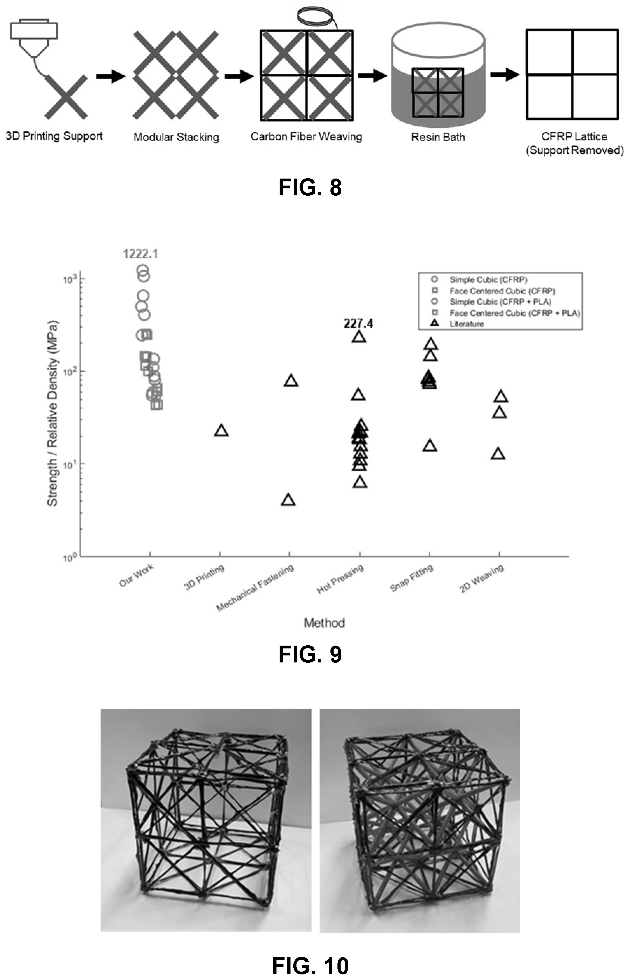

In this process, the carbon fiber was wound along a pre-programmed path of the FCC structure, as illustrated in FIG. 7. The high-strength continuous fibrous material was precisely fixed to the node branch portions of each node support, and was maintained at a constant tension while extending along surfaces of the node supports and the core supports. The wound structure was impregnated by a resin-bath immersion method by fully immersing the structure in a commercially available low-viscosity epoxy resin having a viscosity of about 300 to 500 cP so that the resin uniformly coated even the inner surfaces of the complex lattice. After the structure was fully submerged in the resin, internal bubbles and excess resin were removed through multiple rotation steps. After impregnation, the structure was naturally cured at room temperature for 24 hours to complete resin curing without additional high-temperature treatment. After curing, the PLA supports could be removed by mechanical cutting or by heat and dissolution treatment, and the relative density and mechanical properties of the final structure were adjusted depending on whether the supports were removed. The manufacturing process is illustrated in FIG. 8.

### Example 3: Strength Analysis of Lattice High-Strength Coupling Structure

In the third example, the coupling structures of the present invention manufactured as described above were classified, according to the manufacturing method, into 3D printing, mechanical forming, hot pressing, snap-fit, and 2D winding methods, and a strength-to-relative-density ratio was analyzed. As a result, under the same relative density condition, the lattice high-strength coupling structure manufactured by the manufacturing method proposed in embodiments of the present invention exhibited a strength of 1222.1 MPa, whereas conventional methods exhibited a maximum of 227.4 MPa. It was confirmed that, when the coupling structure was manufactured by the manufacturing method proposed in embodiments of the present invention, an improvement of up to about five times or more was possible as compared to the conventional methods, and the results are shown in the graph of FIG. 9.

### Example 4: Weight Analysis of Lattice High-Strength Coupling Structure

According to the methods described in the above examples, the actually fabricated structures were designed based on 2×2×2 three-dimensional FCC unit cells such that each structure had a size of 50×50×50 mm. Thereafter, the structures were modularized to form a final lattice high-strength coupling structure, and as a result, the overall structure was formed to have an outer shape of a hollow multi-cube form of 100×100×100 mm. At this time, the weight of the entire structure was measured to be about 79 g in a state in which the 3D-printed supports were included. Thereafter, after intended core supports and node supports were removed according to a pre-design, the weight of the structure was reduced to about 34 g.

This corresponds to an average density of about 0.034 g/cm³ with respect to an overall volume of 1,000 cm³ (100×100×100 mm), thereby realizing an ultra-lightweight structure having a relative density of about 0.021 (2.1%) as compared to a reference density of a carbon-fiber composite, i.e., about 1.6 g/cm³. Before and after removal of the supports are shown in FIG. 10.

### Example 5: Comparative Analysis of Compressive Load of Lattice High-Strength Coupling Structure

Based on the structures actually fabricated according to the methods described in the above examples, deformation behavior and compressive strength were comparatively calculated according to the configuration of each structure. Specifically, a structure composed solely of a core support having a BCC structure; lattice high-strength coupling structures having SCC and FCC structures including supports; and lattice high-strength coupling structures having SCC and FCC structures from which the supports were removed were fabricated in sizes of 25 mm, 37 mm, and 50 mm and compared.

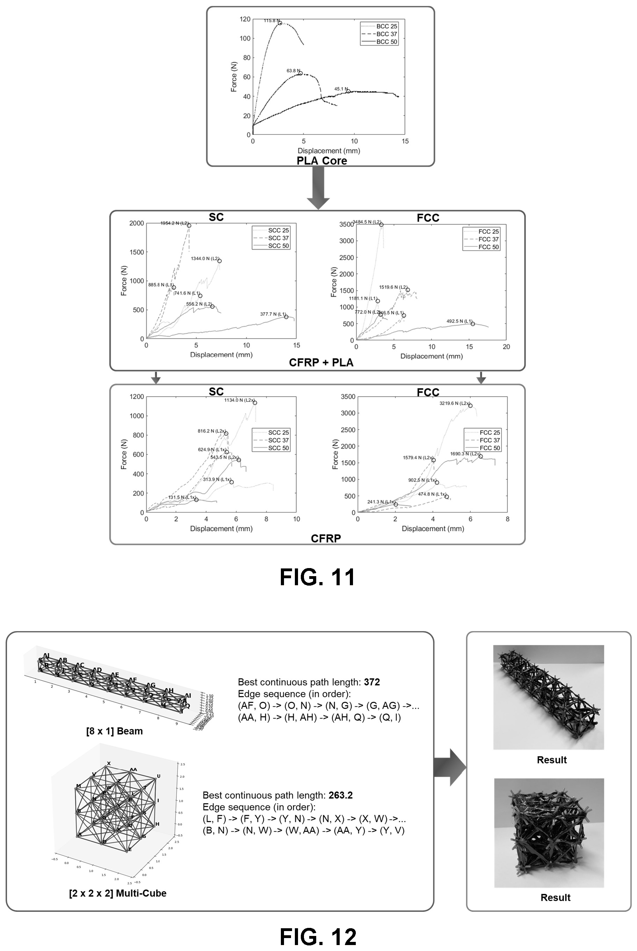

Under the same structural conditions, smaller sizes exhibited higher compressive load values, and among the lattice high-strength coupling structures having SCC and FCC structures including supports, the FCC structure exhibited a higher compressive load value. Under the same structure, when the supports were removed, lower compressive load values were observed than in the case where the supports were included. It was confirmed that smaller sizes exhibited higher strength, and no change in the result pattern depending on whether the supports were removed was observed, indicating that no significant change in structural contribution was identified. On the other hand, it was confirmed that the high-strength lattice coupling structures including supports exhibited relatively higher compressive load values than those without supports. As a result, in terms of structural strength, a strength difference of BCC < SCC < FCC was confirmed. The results are shown in FIG. 11.

### Example 6: Finite Element Analysis of Lattice High-Strength Coupling Structure

According to the methods described in the above examples, unit cells were stacked and expanded to design lattice high-strength coupling structures in a beam form and a multi-cube form. In this process, the lattice high-strength coupling structures were designed using a continuous fiber that extends without being cut by winding along a pre-programmed path of an FCC structure, as shown in FIG. 12.

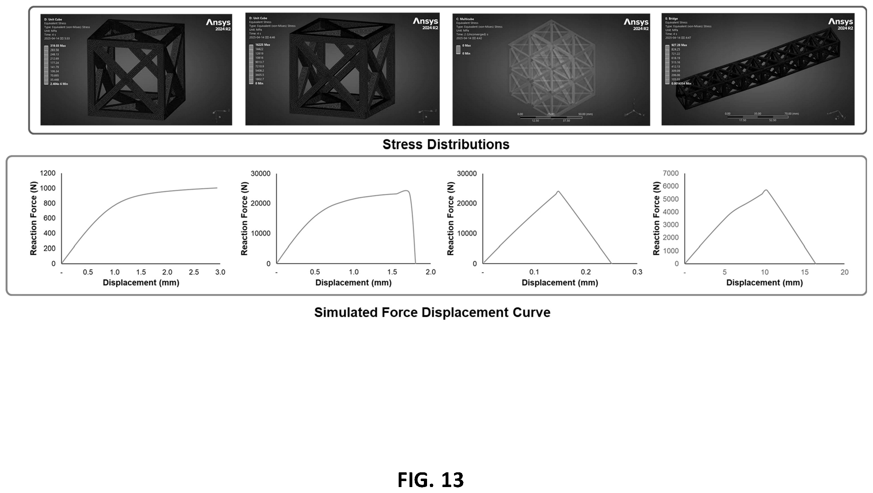

As a result of analyzing stress distribution in an FEA simulation using ANSYS Static Structural, it was confirmed that the multi-unit-cell structures secured more stable strength and stability than a single-unit-cell structure. In the beam structure, the largest displacement and post-peak buckling were observed, whereas in the multi-cube structure, a small displacement and a sharp buckling peak were observed, confirming that deformation occurred only minimally. The results are shown in FIG. 13.

### Example 7: Comparison of Mechanical Properties of Lattice High-Strength Coupling Structure

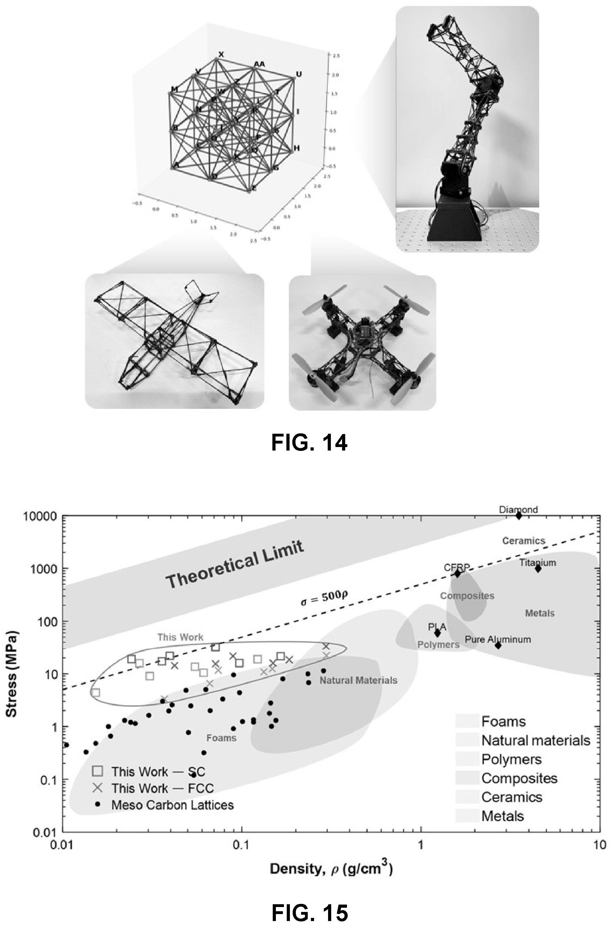

The mechanical properties of the lattice structures fabricated in embodiments of the present invention were compared using a strength-density graph, and the results are shown in FIG. 14. As a result, the structure of the present invention exhibited a strength improvement of about five times or more compared to conventional foams, and it was confirmed that a compressive strength of up to about 200 MPa was secured at the same density.

In particular, the structure to which an FCC structure and Type B clip-lock nodes were applied exhibited, in terms of strength-to-density ratio, performance close to that of conventional composites (CFRP), thereby demonstrating that the structure is an ultra-lightweight, ultra-high-strength composite structure approaching a theoretical limit.

### Example 8: Comparison of Electrical Properties of Lattice High-Strength Coupling Structure

In order to verify electrical properties of the three-dimensional node-based continuous-fiber composite structure of the present invention, voltage-time behavior of a nylon-based insulating structure and CFRL structures (CFRL1 and CFRL2) according to the present invention were compared, and the results are shown in FIG. 15.

As a result of the experiment, the nylon specimen exhibited a rapid voltage drop to 10 V or less within about 11 minutes, whereas the CFRL1 specimen maintained a stable voltage up to about 14.5 minutes and the CFRL2 specimen maintained a stable voltage up to about 16 minutes. In particular, the CFRL2 specimen to which a Type B clip-lock node structure was applied reduced contact resistance between continuous fibers, thereby improving stability of a conductive path, and the voltage retention time was improved by about 40% or more.

This suggests that the structure of the present invention can be expanded beyond a simple mechanical structure into a multifunctional composite platform having electrical functionality.

### Example 9: Application Demonstration of Lattice High-Strength Coupling Structure

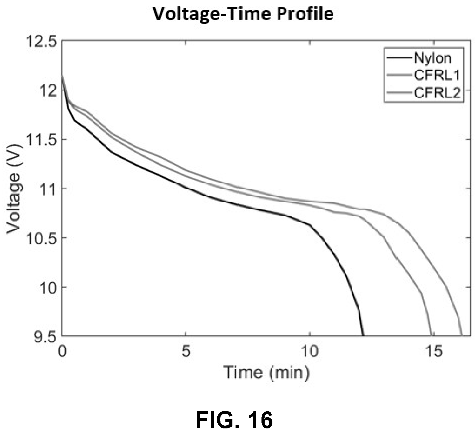

Using the manufacturing method of the present invention, a robotic arm, a drone, and a small aircraft were implemented, and weight reduction, strength, and efficiency were evaluated, as shown in FIG. 16. Specifically, a robotic arm was implemented by replacing a two-link structure and applying SC/FCC lattice structures. As a result of verifying weight reduction, strength, and efficiency by applying SC/FCC lattices with a single continuous fiber path, the mass was reduced by about 53.7%, joint torque and current were reduced by about 23% to 45%, and the maximum payload increased by about 9.7%; further, structural efficiency (N/kg) was improved by about 137%. In addition, it was confirmed that no joint damage occurred even during repeated operation.

Next, a drone frame was implemented using an X-shaped lattice beam with an FCC/SC hybrid design structure. It was confirmed that the frame mass was reduced by about 40% to 79% compared to a baseline nylon frame. System power was reduced by about 18% to 25%, and flight time was increased by about 22% to 33%. By cross-applying FCC-based beams and SC reinforcing beams, both a weight-reduction effect and durability could be secured, and since module replacement and rearrangement are possible, the structure can be expanded to various drone shapes.

In addition, a small aircraft was implemented using a modular multi-lattice hybrid structure. Wings were implemented with a triangular-prism lattice, and the structure was implemented with a mixed design including a horizontal tail of a 2D square grid and a fuselage of an SC structure with FCC node reinforcement. Node joint strength could be secured through a continuous fiber path, and relative density and strength-to-weight ratio could be adjusted by selectively removing supports. This suggests that the present invention is not limited to SC/FCC/BCC structures and can be extended to various topologies such as triangular prisms and 2D grids.

Accordingly, it was confirmed that the present invention has platform potential applicable not only to simple small aircraft but also to complex overall aircraft structures (an integrated fuselage-wing-tail The foregoing description is merely illustrative of the technical idea of the present invention, and a person having ordinary skill in the art to which the present invention pertains will be able to make various modifications and variations without departing from the essential characteristics of the present invention. Therefore, the embodiments disclosed herein are not intended to limit the technical idea of the present invention, but to describe the same, and the scope of the technical idea of the present invention is not limited by these embodiments. The scope of protection of the present invention should be construed according to the claims below, and all technical ideas within an equivalent scope should be construed as being included in the scope of the rights of the present invention.

## Claims

1. - A lattice high-strength coupling structure, comprising:
- a plurality of core supports;
- a node support connected to ends of the core supports to form connections among the plurality of core supports;
- a continuous fibrous material provided to extend continuously without discontinuity along an outer surface of a three-dimensional structure constituted by the core supports and the node support; and
- a resin material forming a coating on the core supports, the node support, and the continuous fibrous material.

2. - The lattice high-strength coupling structure of claim 1, wherein at least one of the core supports and the node support includes: at least one selected from the group consisting of PLA, ABS, PETG, TPU, Nylon, PC, and ASA, which are 3D-printing-based thermoplastic resin filaments; and at least one selected from the group consisting of PVA and BVOH, which are water-soluble support filaments.

3. - The lattice high-strength coupling structure of claim 1, wherein the plurality of core supports includes a plurality of core branch portions extending in a rod shape from a center so as to form a mutually orthogonal structure.

4. - The lattice high-strength coupling structure of claim 1, wherein the node support includes:
- a first-type node support including a plurality of node branch portions extending from a center so as to form a mutually orthogonal structure; and
- a second-type node support having a clip-lock structure in which insertion is performed by pressing in one direction and separation in a reverse direction is difficult.

5. - The lattice high-strength coupling structure of claim 4, wherein node branch portions of the first-type node support have a smaller diameter than the core branch portions, and ends of the node branch portions are inserted into ends of the core branch portions to connect the core supports, thereby forming one unit cell.

6. - The lattice high-strength coupling structure of claim 5, wherein, in the unit cell, a center of the plurality of core supports is a body center of a body-centered cubic (BCC) structure, and a center of the first-type node support forms outer corners of the BCC structure, thereby forming a unit-cell assembly.

7. - The lattice high-strength coupling structure of claim 5, wherein the unit cell has, crystallographically, a lattice form of one of a simple cubic (SC) structure, a body-centered cubic (BCC) structure, and a face-centered cubic (FCC) structure.

8. - The lattice high-strength coupling structure of claim 4, wherein the plurality of the core supports and the second-type node support are connected to form a two-dimensional unit cell (2D unit cell), and the two-dimensional unit cell is configured to be continuously extended into a three-dimensional node structure.

9. - The lattice high-strength coupling structure of claim 5, wherein the unit cell is selectively removable or maintainable.

10. - The lattice high-strength coupling structure of claim 1, wherein the continuous fibrous material includes:
- at least one selected from the group consisting of carbon fiber, glass fiber, basalt fiber, ceramic fiber, silicon carbide fiber, alumina fiber, aramid fiber, Kevlar fiber, graphite fiber, PBO fiber, PEEK fiber, PPS fiber, and metal fiber, which are reinforcing fibers; and
- at least one selected from the group consisting of polyester, nylon, polyurethane, polyethylene, polypropylene, yarn fiber, cotton fiber, flax fiber, bamboo fiber, silk fiber, and polylactic acid fiber, which are non-reinforcing fibers.

11. - A method for manufacturing a lattice high-strength coupling structure of claim 1, wherein the resin material includes at least one selected from:
- a group consisting of epoxy, vinyl ester, unsaturated polyester, phenolic resin, melamine resin, and urea resin, which are irreversible thermosetting resins; and
- a group consisting of Diels-Alder-based resins, imine-based resins, urea/urethane dynamic resins, and vitrimers, which are reversible thermosetting resins, and includes a low-viscosity resin having a viscosity of 300 to 500 cps.

12. - The lattice high-strength coupling structure of claim 1, wherein the lattice high-strength coupling structure has a three-dimensional structure.

13. - A method for manufacturing a lattice high-strength coupling structure, comprising:
- preparing a plurality of core supports including a plurality of core branch portions and a node support including node branch portions;
- connecting the node branch portions of the node support to the core branch portions of the plurality of core supports to form a unit cell lattice structure;
- disposing a continuous fibrous material along outer surfaces of the plurality of core supports and the node support; and
- impregnating a unit cell wound with the continuous fibrous material with a resin material to form a coating on a surface of the unit cell.

14. - The method of claim 13, wherein the step of winding the continuous fibrous material comprises:
- designing at least one single path capable of covering an outer surface of the support on the condition that the continuous fibrous material is not cut in the unit cell; and
- winding the continuous fibrous material along the designed at least one single path;

15. - The method of claim 14, further comprising: after the step of winding the continuous fibrous material, tensioning the continuous fibrous material.

16. - The method of claim 13, further comprising: after impregnating the unit cell with the resin material, drying for 2 hours to 24 hours.

17. - The method of claim 13, further comprising: after forming the coating on the unit cell surface, selectively removing the unit cell to provide a porous weight-reduction step.
